# EUROPÄISCHE PATENTSCHRIFT

(11) **EP 0 830 983 B1**
(45) Veröffentlichungstag und Bekanntmachung des Hinweises auf die Patenterteilung: **17.04.2002**
(21) Anmeldenummer: 97115321.8
(22) Anmeldetag: 04.09.1997
(51) Int. Cl.: B60Q 1/26

(54) **Leuchte für Fahrzeuge**
Vehicle light
Feux pour véhicule

(30) Priorität: 18.09.1996 DE 19638063
(43) Veröffentlichungstag der Anmeldung: 25.03.1998
(73) Patentinhaber: Hella KG Hueck & Co., 59552 Lippstadt (DE)
(72) Erfinder: Brandherm, Rolf, 33449 Langenberg (DE); Tippkötter, Frank, 59555 Lippstadt (DE); Weddemann, Heribert, 59558 Lippstadt (DE)

(56) Entgegenhaltungen:
- EP-A- 0 299 151
- EP-A- 0 541 955
- WO-A-91/17067
- BE-A- 423 050
- DE-A- 3 836 032
- US-A- 4 506 314

## Beschreibung

Die Erfindung betrifft eine Leuchte für Fahrzeuge, insbesondere Kennzeichenleuchte für Fahrzeuge, mit einem außen am Fahrzeug befestigbaren Gehäuseteil, welches eine umlaufende Seitenwand aufweist, die in einem Abschnitt von einer lichtdurchlässigen Abschlußscheibe komplettiert ist, und mit einem auf das Gehäuseteil aufgesetzten Abdeckteil, welches mit seiner Innenseite an den freien Rand der Seitenwand des Gehäuseteils angrenzend verläuft, und eine Freimachung für die lichtdurchlässige Abschlußscheibe aufweist.

Eine solche Leuchte für Fahrzeuge ist aus der deutschen Patentanmeldung 38 36 032 bekannt geworden. Bei der Leuchte handelt es sich um eine Warnblinkleuchte für Nutzkraftfahrzeuge. Ein Gehäuseteil weist eine außen am Fahrzeug befestigbare Halteplatte auf, an deren Vorderseite eine Lampe gehaltert ist. Die Lampe ist von einer an die Halteplatte angeformten Seitenwand umgeben, die in einem Abschnitt von einer lichtdurchlässigen Abschlußscheibe komplettiert ist. Die lichtdurchlässige Abschlußscheibe, die Seitenwand und die Halteplatte des Gehäuseteils sind einstückig aus einem lichtdurchlässigen Kunststoff hergestellt. Auf das Gehäuseteil ist ein Abdeckteil aufgesetzt, welches mit seiner Innenseite an dem freien Rand der Seitenwand des Gehäuseteils unter Zwischenschaltung einer Dichtung anliegt, und einer Freimachung für die lichtdurchlässige Abschlußscheibe aufweist. Die Freimachung liegt mit ihrer schmalen Seite an dem äußeren Rand der lichtdurchlässigen Abschlußscheibe an. Deshalb, und weil das Abdeckteil eine schwach gewölbte Schale ist, muß das Abdeckteil bei seinem Aufsetzen auf das Gehäuse mit dem Rand seiner Freimachung genau zur Abschlußscheibe ausgerichtet werden. Erst nach einem Ausrichten des Abdeckteils zu dem Gehäuseteil sind die beiden Teile mittels einer Befestigungsvorrichtung, wie z.B. einer Schraubenverbindung, miteinander verbindbar.

Aufgabe der Erfindung ist es, die im Oberbegriff des Anspruchs 1 beschriebene Leuchte für Fahrzeuge derart zu gestalten, daß das Abdeckteil auch dann leicht und schnell mit einem großen Spiel auf das Gehäuseteil aufsetzbar ist, wenn das Abdeckteil nach seinem Aufsetzen selbsttätig eine genaue Lage zu dem Gehäuseteil und der Abschlußscheibe einnimmt. Diese Aufgabe wird nach der Erfindung dadurch gelöst, daß
- das Gehäuseteil mit seiner umlaufenden Seitenwand und das Abdeckteil mit einer die Freimachung aufweisenden Seitenwand ineinandergeschoben sind;
- seitliche Randabschnitte der Freimachung des Abdeckteils mit ihren schmalen Seiten die Freimachung begrenzen und mit ihrer Innenseite in einer gemeinsamen Fläche liegend und als Anlagefläche für die Seitenwand des Gehäuseteils dienen;
- das Abdeckteil sich zumindest mit einem der Anlagefläche zugewandten Abschnitt seiner Seitenwand entgegen der Aufsetzrichtung verjüngt, wobei die Innenseite des Abschnitts als Auflaufschräge für die Seitenwand des Gehäuseteils dient.

Beim Aufsetzen des Abdeckteils auf das Gehäuseteil gleitet das Abdeckteil mit der Auflaufschräge seiner Seitenwand an der Seitenwand des Gehäuseteils entlang, bis die Seitenwand des Gehäuseteils angrenzend zu einer in Aufsetzrichtung gerichteten Innenseite des Abdeckteils verläuft und die Seitenwand des Gehäuseteils im Bereich der Abschlußscheibe an die Anlagefläche der Randabschnitte der Freimachung angrenzt. Danach kann das Abdeckteil mittels Befestigungselementen, wie z.B. Schrauben, mit dem Gehäuseteil verbunden werden. Da nach einem Aufsetzen des Abdeckteils auf das Gehäuseteil ihre Seitenwände ineinandergeschoben sind, ist die Nahtstelle zwischen dem freien Rand der Seitenwand des Gehäuseteils und der Innenseite des Abdeckteils, geschützt vor Schmutz und Spritzwasser, angeordnet.

Das Abdeckteil ist in allen Richtungen quer zur seiner Aufsetzrichtung mit einem großem Spiel auf die Seitenwand des Gehäuseteils aufsetzbar, wenn das Abdeckteil mit seiner Seitenwand sich bis auf die Randabschnitte der Freimachung entgegen der Aufsetzrichtung verjüngt und in diesem gesamten Bereich mit seiner Innenseite als Auflaufschräge für das Gehäuseteil dient. Die Seitenwände des Gehäuseteils und des Abdeckteils können ohne zusätzliche verstellbare Werkzeugteile entformt werden, wenn die als Auflaufschräge dienende Innenseite der Seitenwand des Abdeckteils und die der Auflaufschräge zugewandte Außenseite der Seitenwand des Gehäuseteils einen nach außen geöffneten Spalt begrenzen, welcher sich zu seinem Grund hin verjüngt. Hierbei gleitet beim Aufsetzen des Abdeckteils auf das Gehäuseteil die Auflaufschräge an dem freien Rand der Seitenwand des Gehäuseteils entlang bis der freie Rand an einer in Aufsetzrichtung gerichteten Innenseite des Abdeckteils angrenzt.

Beim Aufsetzen des Abdeckteils können sich die Seitenwände des Abdeckteils und des Gehäuseteils nicht ineinander verhaken, wenn in Aufsetzrichtung des Abdeckteils gesehen sowohl die Seitenwand des Abdeckteils als auch die Seitenwand des Gehäuseteils bis auf den Bereich der Abschlußscheibe und ihrer Anlagefläche in einem Bogen verläuft.

Die Leuchte baut in ihren äußeren Abmessungen sehr klein, wenn die an den freien Rand der Seitenwand des Gehäuseteils angrenzende Innenseite des Abdeckteils von einer oberen Wand des Abdeckteils gebildet ist, welche mit ihrem äußeren Randbereich angrenzend zum freien Rand der Seitenwand des Gehäuseteils verläuft. Hierbei kann die Innenseite des äußeren Randbereichs der oberen Wand als Anschlag für den freien Rand der Seitenwand des Gehäuseteils dienen.

Weiterhin ist es vorteilhaft, wenn die Auflaufschräge des Abdeckteils in einem spitzen Winkel zu einer an das Fahrzeug anlegbaren Halteplatte des Gehäuseteils verläuft und die der Auflaufschräge zugewandte Außenseite der Seitenwand des Gehäuseteils in einem stumpfen Winkel zur Halteplatte des Gehäuseteils verläuft. Bei dem Anbau der Leuchte an einer vertikalen Fahrzeugfläche fließt Spritzwasser, welches zwischen die Seitenwände des Gehäuseteils und des Abdeckteils eingedrungen ist, immer von der zwischen dem freien Rand des Gehäuseteils und der Innenseite des Abdeckteils bestehenden Nahtstelle weg. Außerdem lassen sich die Seitenwände wegen großer Auszugsschrägen leicht entformen.

Die Naht zwischen dem freien Rand der Seitenwand des Gehäuseteils und der Innenseite des Abdeckteils ist dicht gegen Schmutz und Spritzwasser, wenn in den äußeren Randbereich der oberen Wand des Aufnahmeteils ein Aufnahmebett eingebracht ist, in welches die umlaufende Seitenwand des Gehäuseteils dicht eingreift. In das Aufnahmebett kann auch eine aus elastischem Werkstoff hergestellte Dichtung eingesetzt sein. In diesem Zusammenhang ist es weiterhin vorteilhaft, wenn das Aufnahmebett in seinem Querschnitt u-förmig gestaltet ist, wobei die äußere Wand des Aufnahmebetts von der Seitenwand des Abdeckteils gebildet ist und die innere Wand an die obere Wand des Abdeckteils angeformt ist.

Die seitlichen Ränder von Abschlußscheibe und Freimachung können sich beim Aufsetzen des Abdeckteils nicht verklemmen, wenn die lichtdurchlässige Abschlußscheibe und die sie aufnehmende Freimachung mit ihren seitlichen Rändern sich entgegen der Aufsetzrichtung verjüngen, wobei die Freimachung in Aufsetzrichtung offen ausgeführt ist und die Außenseite der Abschlußscheibe bündig zu dem angrenzenden Randabschnitt der Freimachung verläuft.

Das Abdeckteil ist nach seinem Aufsetzen auf das Gehäuseteil mittels eines Befestigungsmittels, wie z.B. einer Befestigungsschraube, an dem Gehäuse festsetzbar, wenn an das Gehäuseteil mindestens ein entgegen der Aufsetzrichtung gerichteter Befestigungsansatz angeformt ist, welcher sich zu einer Befestigungsöffnung des Abdeckteils hin erstreckt. Durch die Befestigungsöffnung des Abdeckteils ist die Schraube mit ihrem Gewindeschaft hindurchführbar und in den Befestigungsansatz eindrehbar, bis der Kopf der Befestigungsschraube an der Außenseite des Abdeckteils anliegt. Da das Abdeckteil nach seinem Aufsetzen auf das Gehäuseteil immer eine genau Lage zum Gehäuseteil einnimmt, ist auch der Befestigungsansatz genau zu der Befestigungsöffnung ausgerichtet.

Das Einfädeln der Seitenwand des Gehäuseteils in das Abdeckteil hinein ist besonders leicht, wenn die obere Wand des Abdeckteils in einem spitzen Winkel zur Abschlußscheibe verläuft.

Eine im Leuchteninneren angeordnete Lampe ist leicht und schnell wechselbar, wenn die Lampe an der Innenseite der oberen Wand des Abdeckteils gehaltert ist. Die Lampe kann nach einem Abnehmen des Abdeckteils von dem Gehäuseteil an dem Abdeckteil gewechselt werden.

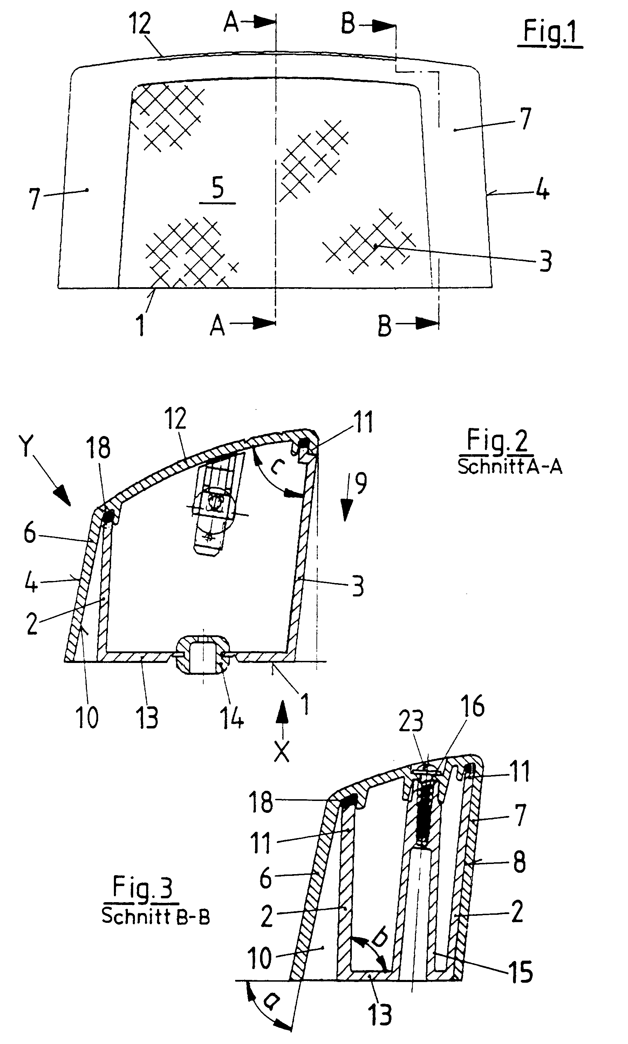

Ein Ausführungsbeispiel nach der Erfindung ist in der Zeichnung dargestellt und zwar zeigen
- Figur 1: eine Vorderansicht auf eine Kennzeichenleuchte mit einer Abschlußscheibe, welche in einer Freimachung eines Abdeckteils angeordnet ist;
- Figur 2: einen Schnitt nach der Linie A-A in Figur 1;
- Figur 3: einen Schnitt nach der Linie B-B in Figur 1;

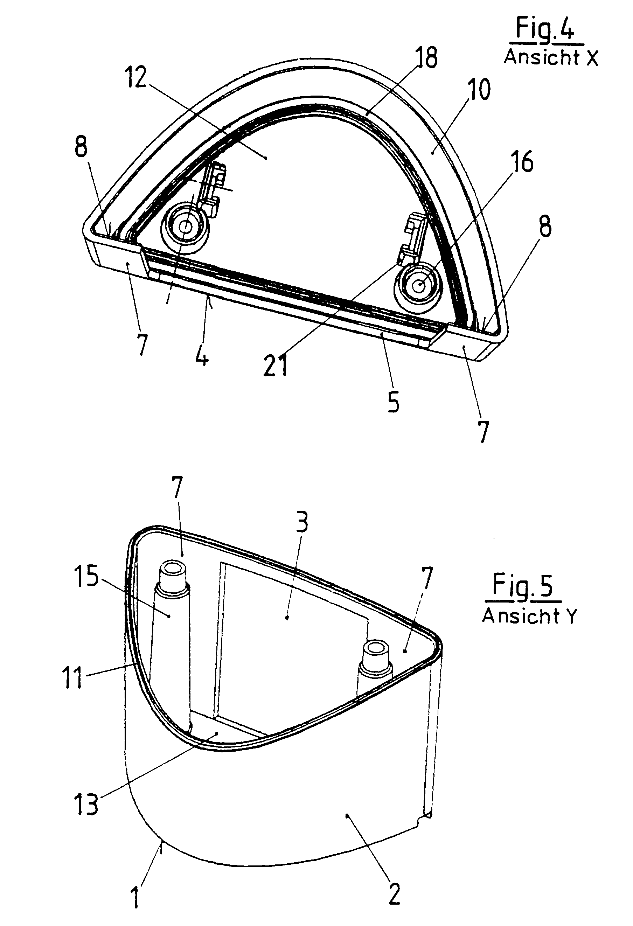

- Figur 4: eine Ansicht aus Richtung X in das Innere des Abdeckteils;
- Figur 5: eine Ansicht aus Richtung Y auf ein Gehäuseteil, auf welches das Abdeckteil aufgesetzt ist und

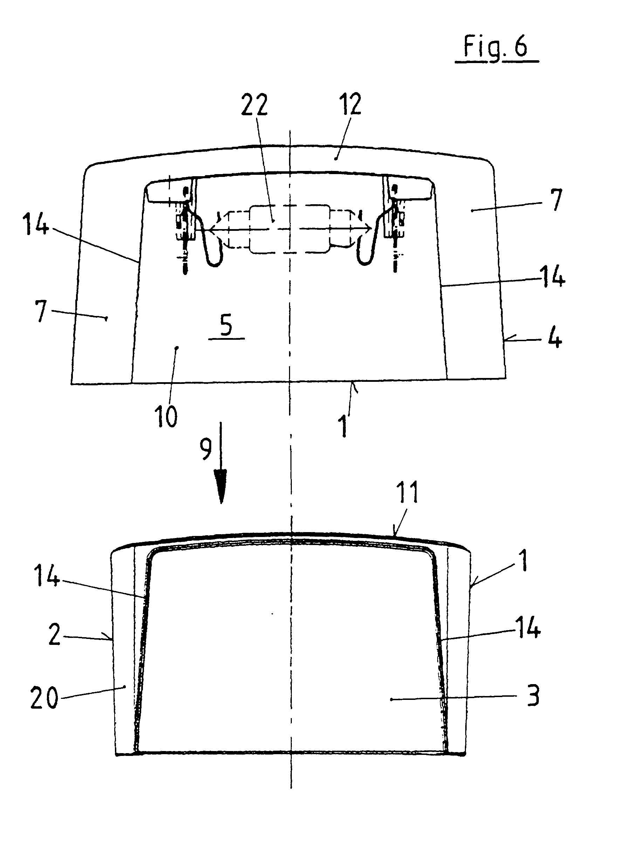

- Figur 6: das Abdeckteil und das Gehäuseteil vor ihrem Zusammenbau.

Die Zeichnung zeigt eine Kennzeichenleuchte, welche mit einem Gehäuseteil (1) an einem Fahrzeug befestigbar ist. Das Gehäuseteil (1) weist eine Halteplatte (13) auf, welche an eine nicht dargestellte vertikale Fahrzeugfläche anlegbar ist und durch nicht dargestellte Befestigungsbolzen an dem Fahrzeug festsetzbar ist. In eine Öffnung der Halteplatte (13) ist eine aus elastischem Werkstoff bestehende Tülle (14) eingesetzt. Durch die Tülle (14) ist eine elektrische Leitung hindurchführbar. Das Gehäuseteil (1) weist an dem äußeren Rand der Halteplatte (13) eine umlaufende Seitenwand (2) auf. In einem eben ausgeführten Abschnitt ist die Seitenwand (2) von einer mit optischen Elementen besetzten Abschlußscheibe (3) komplettiert. Die Abschlußscheibe (3), die Seitenwand (2) und die Halteplatte (13) sind einstückig aus lichtdurchlässigem Kunststoff hergestellt. Die Abschlußscheibe (3) verläuft mit angrenzenden Bereichen (20) der Seitenwand (2) des Gehäuseteils (1) in einer Ebene, welche in einem stumpfen Winkel zur Halteplatte (13) steht. Der zwischen den Bereichen (20) verlaufende Abschnitt der Seitenwand (2) verläuft in Aufsetzrichtung (9) des Gehäuseteils (2) gesehen in einem ellipsenförmigen Bogen. Auf das Gehäuseteil (1) ist ein aus lichtundurchlässigem Kunststoff bestehenden Abdeckteil (4) mit einer annähernd in Aufsetzrichtung (9) gerichteten Seitenwand (6) aufgeschoben. Die Seitenwand (6) des Abdeckteils (4) erstreckt sich bis in die Fläche, in welcher die Halteplatte (13) verläuft. Die Seitenwand (6) des Abdeckteils (4) weist eine in Aufsetzrichtung (9) geöffnete Freimachung (5) für die Abschlußscheibe (3) auf, welche mit ihrer Hauptfläche annähernd parallel zur Aufsetzrichtung (9) verläuft. Die Abschlußscheibe (3) und die sie aufnehmende Freimachung (5) verjüngen sich mit ihren seitlichen Rändern (14) entgegen der Aufsetzrichtung (9). In die Freimachung (5) greift die erhaben ausgeführte Abschlußscheibe (3) ein und verläuft mit ihrer Außenseite bündig zu der Außenseite der angrenzenden Randabschnitt (7) der Seitenwand (6) des Abdeckteils (4). Die Randabschnitte (7) der Freimachung (5) verlaufen annähernd in der Ebene der Abschlußscheibe (3), während der an die Randabschnitte (7) angrenzende Abschnitt der Seitenwand (6) des Abdeckteils (4) in Aufsetzrichtung (9) gesehen in einem elliptischen Bogen verläuft. Der in einem elliptischen Bogen verlaufende Abschnitt der Seitenwand (6) des Abdeckteils (4) verjüngt das Abdeckteil (4) entgegen der Aufsetzrichtung (9) bis zu einer oberen Wand (12) des Abdeckteils (4). Die Innenseite des in einem Bogen verlaufenden Abschnitts der Seitenwand (6) des Abdeckteils (4) dient als Auflaufschräge (10) für den freien Rand (11) der Seitenwand (2) des Gehäuseteils (1). Die obere Wand (12) des Abdeckteils (4) weist an seinem inneren Randbereich ein u-förmiges Aufnahmebett (18) auf. Die äußere Wand des u-förmigen Aufnahmebetts (18) ist umlaufend von der Seitenwand (6) des Abdeckteils (4) gebildet, während die innere Wand an die Innenseite der oberen Wand (12) angeformt ist. In das u-förmige Aufnahmebett (18) ist umlaufend eine Dichtung eingesetzt, an welcher die Seitenwand (2) des Gehäuseteils (1) mit ihrem freien Rand (11) dicht anliegt. Die obere Wand (12) verläuft in einem spitzen Winkel (a) zu der in einer Ebene verlaufenden Abschlußscheibe (3), während die Seitenwand (6) des Abdeckteils (4) in einem spitzen Winkel (a) zu der Fläche der Halteplatte (13) und die Seitenwand (2) des Gehäuseteils (1) zumindest abschnittsweise in einem stumpfen Winkel (b) zur Fläche der Halteplatte (13) verläuft. An die Innenseite der oberen Wand (12) des Abdeckteils (4) sind Halteelemente (21) für eine Lampe (22) angebracht. An die Innenseite der Halteplatte (13) des Gehäuseteils (1) sind Befestigungsansätze (15) angeformt, welche sich entgegen der Aufsetzrichtung (9) zu Befestigungsöffnungen (16) hin erstrecken, welche in die obere Wand (12) des Abdeckteils (4) eingebracht sind. Durch die Befestigungsöffnungen (16) sind Befestigungsschrauben (23) mit ihrem Gewindeschaft hindurchgeführt und in den Befestigungsansatz (15) hineingedreht, bis der Kopf der Befestigungsschraube (23) dicht an der Außenseite des Abdeckteils (4) anliegt. Zwischen dem Kopf der Befestigungsschraube (23) und dem Abdeckteil (4) ist eine Dichtungsscheibe angeordnet. Beim Aufschieben der Seitenwand (6) des Abdeckteils (4) auf die Seitenwand (2) des Gehäuseteils (1) gleitet die Auflaufschräge (10) an dem freien Rand (11) der Seitenwand (2) des Gehäuseteils (1) entlang, bis der freie Rand (11) der Seitenwand (2) an dem Aufnahmebett (18) der oberen Wand (12) des Abdeckteils (4) anliegt. In dieser Lage des Abdeckteils (4) hat sich die Abschlußscheibe (3) selbsttätig in die Freimachung (5) des Abdeckteils (4) eingefädelt und die an die Abschlußscheibe (3) heranführenden Bereiche (20) der Seitenwand (6) des Abdeckteils (4) liegen an der Anlagefläche (8) der Randabschnitte (7) der Freimachung (5) an.

### Bezugszeichenliste

Leuchte für Fahrzeuge, insbesondere Kennzeichenleuchte für Fahrzeuge
- 1: Gehäuseteil
- 2: Seitenwand des Gehäuseteils
- 3: Abschlußscheibe
- 4: Abdeckteil
- 5: Freimachung
- 6: Seitenwand des Abdeckteils
- 7: Randabschnitte der Freimachung
- 8: Anlagefläche
- 9: Aufsetzrichtung
- 10: Auflaufschräge
- 11: Rand
- 12: Wand
- 13: Halteplatte
- 14: Ränder
- 15: Befestigungsansatz
- 16: Befestigungsöffnung
- 17: Lampe
- 18: Aufnahmebett
- 19: Tülle
- 20: Bereiche
- 21: Halteelement
- 22: Lampe
- 23: Befestigungsschrauben

## Patentansprüche

1. Leuchte für Fahrzeuge, insbesondere Kennzeichenleuchte für Fahrzeuge, mit einem außen am Fahrzeug befestigbaren Gehäuseteil (1), welches eine umlaufende Seitenwand (2) aufweist, die in einem Abschnitt von einer lichtdurchlässigen Abschlußscheibe (3) komplettiert ist und mit einem auf das Gehäuseteil (1) aufgesetzten Abdeckteil (4), welches mit seiner Innenseite an den freien Rand (11) der Seitenwand (2) des Gehäuseteils (1) angrenzend verläuft und eine Freimachung (5) für die lichtdurchlässige Abschlußscheibe (3) aufweist, **dadurch gekennzeichnet, daß**
- das Gehäuseteil (1) mit seiner umlaufenden Seitenwand (2) und das Abdeckteil (4) mit einer die Freimachung (5) aufweisenden Seitenwand (6) ineinandergeschoben sind,
- seitliche Randabschnitte (7) der Freimachung (5) des Abdeckteils (4) mit ihren schmalen Seiten die Freimachung (5) begrenzen und mit ihrer Innenseite in einer gemeinsamen Fläche liegen und als Anlagefläche (8) für die Seitenwand (2) des Gehäuseteils (1) dienen.
- das Abdeckteil (4) zumindest mit einem der Anlagefläche (8) zugewandten Abschnitt seiner Seitenwand (4) sich entgegen seiner Aufsetzrichtung (9) verjüngt, wobei die Innenseite dieses Abschnitts als Auflaufschräge (10) für die Seitenwand (2) des Gehäuseteils (1) dient.

2. Kennzeichenleuchte nach Anspruch 1, **dadurch gekennzeichnet, daß** das Abdeckteil (4) mit seiner Seitenwand (6) sich bis auf die Randabschnitte (7) der Freimachung (5) entgegen der Aufsetzrichtung (9) verjüngt und in diesem gesamten Bereich mit seiner Innenseite als Auflaufschräge (10) für das Gehäuseteil (1) dient.

3. Kennzeichenleuchte nach Anspruch 1 oder 2, **dadurch gekennzeichnet, daß** die als Auflaufschräge (10) dienende Innenseite der Seitenwand (6) des Abdeckteils (4) und die der Auflaufschräge (10) zugewandte Außenseite der Seitenwand (2) des Gehäuseteils (1) einen nach außen geöffneten Spalt begrenzen, welcher sich zu seinem Grund hin verjüngt.

4. Kennzeichenleuchte nach einem der Ansprüche 1 bis 3, **dadurch gekennzeichnet, daß** in Aufsetzrichtung (9) gesehen sowohl die Seitenwand (6) des Abdeckteils (4) als auch die Seitenwand (2) des Gehäuseteils (1) bis auf den Bereich der Abschlußscheibe (3) und ihrer Anlagefläche (8) in einem zur Abschlußscheibe (3) hin geöffneten Bogen verläuft.

5. Kennzeichenleuchte nach einem der Ansprüche 1 bis 4, **dadurch gekennzeichnet, daß** die an den freien Rand (11) der Seitenwand (2) des Gehäuseteils (1) angrenzende Innenseite des Abdeckteils (4) von einer oberen Wand (12) des Abdeckteils (4) gebildet ist, welche mit ihrem äußeren Randbereich angrenzend zum freien Rand (11) der Seitenwand (2) des Gehäuseteils (1) verläuft.

6. Kennzeichenleuchte nach einem der Ansprüche 1 bis 5, **dadurch gekennzeichnet, daß** die Auflaufschräge (10) des Abdeckteils (4) in einem spitzen Winkel (a) zu einer an das Fahrzeug anlegbaren Halteplatte (13) des Gehäuseteils (1) verläuft.

7. Kennzeichenleuchte nach einem der Ansprüche 1 bis 6, **dadurch gekennzeichnet, daß** die der Auflaufschräge (10) zugewandte Außenseite der Seitenwand (2) des Gehäuseteils (1) zumindest abschnittsweise in einem stumpfen Winkel (b) zur Halteplatte (13) des Gehäuseteils (1) verläuft.

8. Kennzeichenleuchte nach einem der Ansprüche 1 bis 7, **dadurch gekennzeichnet, daß** in den äußeren Randbereich der oberen Wand (12) des Abdeckteils (4) ein Aufnahmebett (18) eingebracht ist, in welche die umlaufende Seitenwand (2) des Gehäuseteils (1) dicht eingreift.

9. Kennzeichenleuchte nach Anspruch 8, **dadurch gekennzeichnet, daß** das Aufnahmebett (18) in seinem Querschnitt u-förmig gestaltet ist, wobei die äußere Wand des Aufnahmebetts (18) von der Seitenwand (6) des Abdeckteils (4) gebildet ist und die innere Wand an die obere Wand (12) des Abdeckteils (4) angeformt ist.

10. Kennzeichenleuchte nach einem der Ansprüche 1 bis 9, **dadurch gekennzeichnet, daß** die lichtdurchlässige Abschlußscheibe (3) und die sie aufnehmende Freimachung (5) mit ihren seitlichen Rändern (14) sich entgegen der Aufsetzrichtung (9) verjüngen, wobei die Freimachung (5) in Aufsetzrichtung (9) offen ausgeführt ist und die Außenseite der Abschlußscheibe (3) bündig zu dem angrenzenden Randabschnitt (7) der Freimachung (5) verläuft.

11. Kennzeichenleuchte nach einem Ansprüche 1 bis 10, **dadurch gekennzeichnet, daß** an das Gehäuseteil (1) mindestens ein entgegen der Aufsetzrichtung (9) gerichteter Befestigungsansatz (15) angeformt ist, welcher sich zu einer Befestigungsöffnung (16) des Abdeckteils (4) hin erstreckt.

12. Kennzeichenleuchte nach einem der Ansprüche 1 bis 11, **dadurch gekennzeichnet, daß** die obere Wand (12) des Abdeckteils (4) in einem spitzen Winkel (c) zur Abschlußscheibe (3) verläuft.

13. Kennzeichenleuchte nach einem der Ansprüche 1 bis 12, **dadurch gekennzeichnet**, an der Innenseite der oberen Wand (12) des Abdeckteils (4) eine Lampe (17) gehaltert ist.

## Claims

1. Light for vehicles, in particular for vehicle number plate illumination, comprising a housing part (1) which is mountable outside the vehicle and includes a peripheral sidewall (2) which is in a section complemented by a light-permeable end plate (3), and with a cover (4) which is placed on the housing part (1) and extends with its inside adjacent the free edge (11) of the sidewall (2) of the housing part (1) and which has an open space (5) for the light-permeable end plate (3), **characterised in that**
- the housing part (1) with its peripheral sidewall (2) and the cover (4) with a sidewall (6) which includes the open space (5) are pushed into each other;
- lateral edge sections (7) of the open space (5) of the cover (4) define the open space (5) with their narrow sides and lie with their inside in a common surface and serve as abutment surface (8) for the sidewall (2) of housing part (1);
- cover (4) narrows at least with a section of its sidewall (4) facing towards the abutment surface (8) against the setting down direction (9), and the inside of this section serves as run-up slant (10) for sidewall (2) of housing part (1).

2. Number plate illumination according to Claim 1, **characterised in that** cover (4) narrows with its sidewall (6) up to the edge sections (7) of the open space (5) against the setting-down direction (9) and serves in this entire area with its inside as run-up slant (10) for the housing part (1).

3. Number plate illumination according to Claim 1 or 2, **characterised in that** the inside of the sidewall (6) of the cover (4) which serves as run-up slant (10) and the outside of the sidewall (2) of the housing part (1) which is facing towards the run-up slant (10) define an outwardly open gap which narrows towards its base.

4. Number plate illumination according to one of Claims 1 to 3, **characterised in that** both the sidewall (6) of the cover (4) and the sidewall (2) of the housing part (1) extend, as seen in the setting-down direction, up to the area of the end plate (3) and its abutment surface (8) at an arc which is open towards the end plate (3).

5. Number plate illumination according to one of Claims 1 to 4, **characterised in that** the inside of the cover (4) which is adjacent the free end (11) of the sidewall (2) of the housing part (1) is formed by an upper wall (12) of cover (4) which extends with its outer edge area adjacent the free edge (11) of the sidewall (2) of the housing part (1).

6. Number plate illumination according to one of Claims 1 to 5, **characterised in that** the run-up slant (10) of the cover (4) extends at an acute angle (a) relative to a support plate (13) of the housing part (1) which is to be placed on the vehicle.

7. Number plate illumination according to one of Claims 1 to 6, **characterised in that** the outside of the sidewall (2) of the housing part (1) facing towards the run-up slant (10) extends at least sectionally at an obtuse angle (b) relative to the support plate (13) of the housing part (1).

8. Number plate illumination according to one of Claims 1 to 7, **characterised in that** into the outer edge area of the upper wall (12) of the cover (4) is entered an accommodation bed (18) which is tightly engaged by the peripheral sidewall (2) of the housing part (1).

9. Number plate illumination according to Claim 8, **characterised in that** the accommodation bed (18) is cross-sectionally of U-shaped design, and the outer wall of the accommodation bed (18) is formed by the sidewall (6) of the cover (4), and the inner wall is formed onto the upper wall (12) of the cover (4).

10. Number plate illumination according to one of Claims 1 to 9, **characterised in that** the light-permeable end plate (3) and its accommodating open space (5) narrow with their lateral edges (14) against the setting-down direction (9), and the open space (5) is in the setting down direction (9) of open design, and the outside of the end plate (3) extends positively joined to the adjacent edge section (7) of the open space (5).

11. Number plate illumination according to one of Claims 1 to 10, **characterised in that** formed onto the housing part (1) is at least one mounting extension (15) oriented against the setting-down direction (9) which extends to a mounting opening (16) of the cover (4).

12. Number plate illumination according to one of Claims 1 to 11, **characterised in that** the upper wall (12) of the cover (4) extends at an acute angle (c) to the end plate (3).

13. Number plate illumination according to one of Claims 1 to 12, **characterised in that** a bulb (17) is held at the inside of the upper wall (12) of the cover (4).

## Revendications

1. Feu pour véhicules, en particulier feu de plaque d'immatriculation pour véhicules, comportant une partie de boîtier (1) qui peut être fixée à l'extérieur sur le véhicule, laquelle présente une paroi latérale (2) périphérique qui est complétée dans un tronçon par une plaque de fermeture (3) transparente, et une partie de recouvrement (4) placée sur la partie de boîtier (1), ladite partie de recouvrement s'étendant avec sa face intérieure de façon contiguë au bord libre (11) de la paroi latérale (2) de la partie de boîtier (1) et présentant un dégagement (5) pour la plaque de fermeture (3) transparente, **caractérisé en ce que** :
- la partie de boîtier (1) avec sa paroi latérale (2) périphérique et la partie de recouvrement (4) avec une paroi latérale (6) présentant le dégagement (5) sont enfilées l'une dans l'autre,
- des tronçons de bord (7) latéraux du dégagement (5) de la partie de recouvrement (4) délimitent avec leurs petits côtés le dégagement (5) et sont situés avec leur face intérieure dans une surface commune et servent de surface d'appui (8) pour la paroi latérale (2) de la partie de boîtier (1),
- au moins avec un tronçon de sa paroi latérale (6) tourné vers la surface d'appui (8), la partie de recouvrement (4) se rétrécit à l'encontre de sa direction de mise en place (9), la face intérieure de ce tronçon servant de pente d'engagement (10) pour la paroi latérale (2) de la partie de boîtier (1).

2. Feu de plaque d'immatriculation selon la revendication 1, **caractérisé en ce que** la partie de recouvrement (4) se rétrécit avec sa paroi latérale (6) à l'encontre de la direction de mise en place (9), à l'exception des tronçons de bord (7) du dégagement (5), et avec sa face intérieure, elle sert dans toute cette région de pente d'engagement (10) pour la partie de boîtier (1).

3. Feu de plaque d'immatriculation selon l'une ou l'autre des revendications 1 et 2, **caractérisé en ce que** la face intérieure, servant de pente d'engagement (10), de la paroi latérale (6) de la partie de recouvrement (4) et la face extérieure, tournée vers la pente d'engagement (10), de la paroi latérale (2) de la partie de boîtier (1) délimitent une fente ouverte vers l'extérieur qui se rétrécit vers son fond.

4. Feu de plaque d'immatriculation selon l'une quelconque des revendications 1 à 3, **caractérisé en ce que** vues en direction de mise en place (9), aussi bien la paroi latérale (6) de la partie de recouvrement (4) que la paroi latérale (2) de la partie de boîtier (1) s'étendent dans un arc ouvert en direction de la plaque de fermeture (3), à l'exception de la région de la plaque de fermeture (3) et de sa surface d'appui (8).

5. Feu de plaque d'immatriculation selon l'une quelconque des revendications 1 à 4, **caractérisé en ce que** la face intérieure de la partie de recouvrement (4), adjacente au bord libre (11) de la paroi latérale (2) de la partie de boîtier (1), est formée par une paroi supérieure (12) de la partie de recouvrement (4), laquelle s'étend avec sa région de bord extérieur de manière contiguë au bord libre (11) de la paroi latérale (2) de la partie de boîtier (1).

6. Feu de plaque d'immatriculation selon l'une quelconque des revendications 1 à 5, **caractérisé en ce que** la pente d'engagement (10) de la partie de recouvrement (4) s'étend sous un angle aigu (a) par rapport à une plaque de retenue (13) de la partie de boîtier (1), qui peut être appliquée sur le véhicule.

7. Feu de plaque d'immatriculation selon l'une quelconque des revendications 1 à 6, **caractérisé en ce que** la face extérieure, tournée vers la pente d'engagement (10), de la paroi latérale (2) de la partie de boîtier (1), s'étend au moins par tronçons sous un angle obtus (b) par rapport à la plaque de retenue (13) de la partie de boîtier (1).

8. Feu de plaque d'immatriculation selon l'une quelconque des revendications 1 à 7, **caractérisé en ce que** dans la région de bord extérieur de la paroi supérieure (12) de la partie de recouvrement (4) est ménagé un lit de réception (18) dans lequel s'engage de manière étanche la paroi périphérique (2) de la partie de boîtier (1).

9. Feu de plaque d'immatriculation selon la revendication 8, **caractérisé en ce que** le lit de réception (18) est réalisé avec une section transversale en forme de U, la paroi extérieure du lit de réception (18) étant formée par la paroi latérale (6) de la partie de recouvrement (4) et la paroi intérieure est conformée sur la paroi supérieure (12) de la partie de recouvrement (4).

10. Feu de plaque d'immatriculation selon l'une quelconque des revendications 1 à 9, **caractérisé en ce que** la plaque de fermeture (3) transparente et le dégagement (5) qui la reçoit se rétrécissent avec leurs bords (14) latéraux à l'encontre de la direction de mise en place (9), le dégagement (5) étant réalisé ouvert en direction de mise en place (9), et la face extérieure de la plaque de fermeture (3) s'étendant en affleurement par rapport au tronçon de bord (7) contigu du dégagement (5).

11. Feu de plaque d'immatriculation selon l'une quelconque des revendications 1 à 10, **caractérisé en ce que** sur la partie de boîtier (1) est conformé au moins un plot de fixation (15) orienté à l'encontre de la direction de mise en place (9), lequel s'étend vers un orifice de fixation (16) de la partie de recouvrement (4).

12. Feu de plaque d'immatriculation selon l'une quelconque des revendications 1 à 11, **caractérisé en ce que** la paroi supérieure (12) de la partie de recouvrement (4) s'étend sous un angle aigu (c) par rapport à la plaque de fermeture (3).

13. Feu de plaque d'immatriculation selon l'une quelconque des revendications 1 à 12, **caractérisé en ce qu'**une lampe (17) est supportée sur la face intérieure de la paroi supérieure (12) de la partie de recouvrement (4).
